# EUROPEAN PATENT SPECIFICATION

(11) **EP 3 531 539 B1**
(45) Date of publication and mention of the grant of the patent: **02.09.2020**
(21) Application number: 17861995.3
(22) Date of filing: 13.10.2017
(51) Int. Cl.: H02K 24/00, H02K 3/52

(54) **RESOLVER STATOR**
DREHMELDERSTATOR
STATOR DE TRANSFORMATEUR

(30) Priority: 19.10.2016 JP 2016204962
(43) Date of publication of application: 28.08.2019
(73) Proprietor: Japan Aviation Electronics Industry, Ltd., Tokyo 150-0043 (JP)
(72) Inventor: HOSOKAWA, Takeshi, Tokyo 150-0043 (JP)
(74) Representative: Guérin, Jean-Philippe
(86) International application number: PCT/JP2017/037109
(87) International publication number: WO 2018/074338

(56) References cited:
- EP-A1- 3 208 920
- DE-A1-102013 111 868
- JP-A- 2009 264 892
- JP-A- 2016 208 790
- JP-A- 2017 143 630
- JP-B1- 5 872 007
- US-A1- 2004 056 552

## Description

### Technical Field

The present invention relates to a resolver stator.

### Background Art

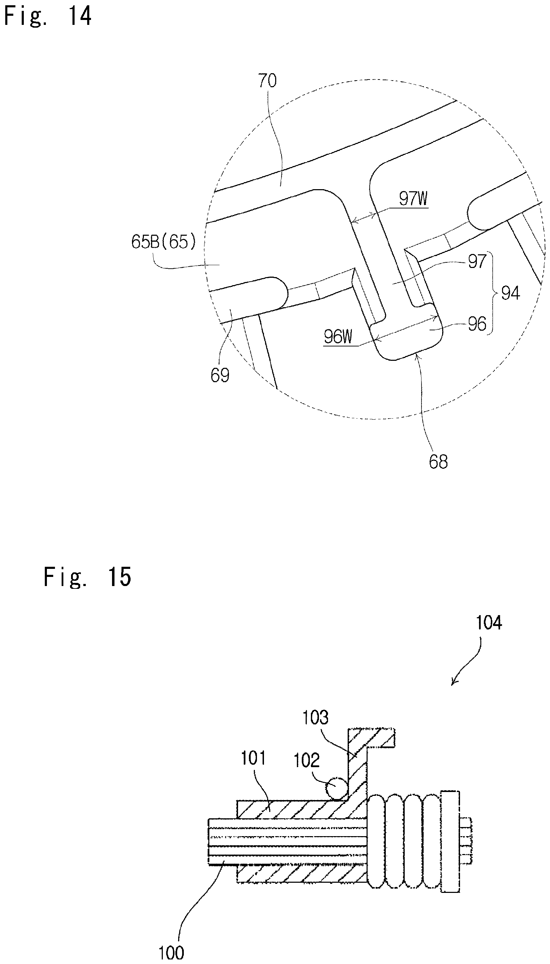

Patent Literature 1 discloses a resolver stator 104 where a connecting pin 103 on which a connecting wire 102 of a stator winding is caught is formed on an insulating cover 101 mounted on a stator body 100 as shown in Fig. 15 of the present application.

### Citation List

### Patent Literature

Patent Literature 1: Japanese Unexamined Patent Application Publication No. 2016-127710

Document EP3028920 is a patent document published after the priority date of the present claimed invention. This document discloses a resolver stator located at the periphery of a rotor. The stator core includes an annular yoke and a plurality of teeth projecting radially inward from the yoke. Coils are wound on the teeth and connected together by connecting wires. A resin function part provides outer peripheral walls opposite respective coils

Doc DE102013111868 discloses a stator for an electric motor, comprising: a stator core having a plurality of stator poles, a winding assembly formed from winding wire having a plurality of windings, each associated with a stator pole, the winding wire having at least first, second and third portions, the winding assembly having at least one electrical connection point to the electrically conductive connection the first, second and third portions. The first portion is mechanically and electrically connected to the first contact element and the second portion is mechanically and electrically connected to the second contact element.

### Summary of Invention

### Technical Problem

The above-described connecting pin 103 has room for improvement in terms of strength.

An object of the present invention is to provide a technique to improve the strength of a guide hook.

### Solution to Problem

Various aspects of the invention are presented in the appended set of claims.

### Advantageous Effects of Invention

According to the present invention, the strength of a guide hook that guides a connecting wire is improved.

### Brief Description of Drawings

Fig. 1 is a perspective view of a resolver where the illustration of coils and connecting wires is omitted (first embodiment).
Fig. 2 is a partial enlarged view of a resolver stator (first embodiment).
Fig. 3 is another partial enlarged view of the resolver stator (first embodiment).
Fig. 4 is a cross-sectional view along line IV-IV of Fig. 5 (first embodiment).
Fig. 5 is a partial plan view of the resolver stator (first embodiment).
Fig. 6 is a partial enlarged view of the resolver stator where the illustration of coils and connecting wires is omitted (modified example).
Fig. 7 is a partial plan view of the resolver stator where the illustration of coils and connecting wires is omitted (modified example).
Fig. 8 is a perspective view of a resolver where the illustration of coils and connecting wires is omitted (second embodiment).
Fig. 9 is a partial enlarged view of a resolver stator (second embodiment).
Fig. 10 is another partial enlarged view of the resolver stator (second embodiment).
Fig. 11 is a cross-sectional view along line XI-XI of Fig. 12 (second embodiment).
Fig. 12 is a partial plan view of the resolver stator (second embodiment).
Fig. 13 is a partial enlarged view of the resolver stator where the illustration of coils and connecting wires is omitted (modified example).
Fig. 14 is a partial plan view of the resolver stator where the illustration of coils and connecting wires is omitted (modified example).
Fig. 15 is a simplified view of Fig. 2 in Patent Literature 1.

### Description of Embodiments

### <First Embodiment>

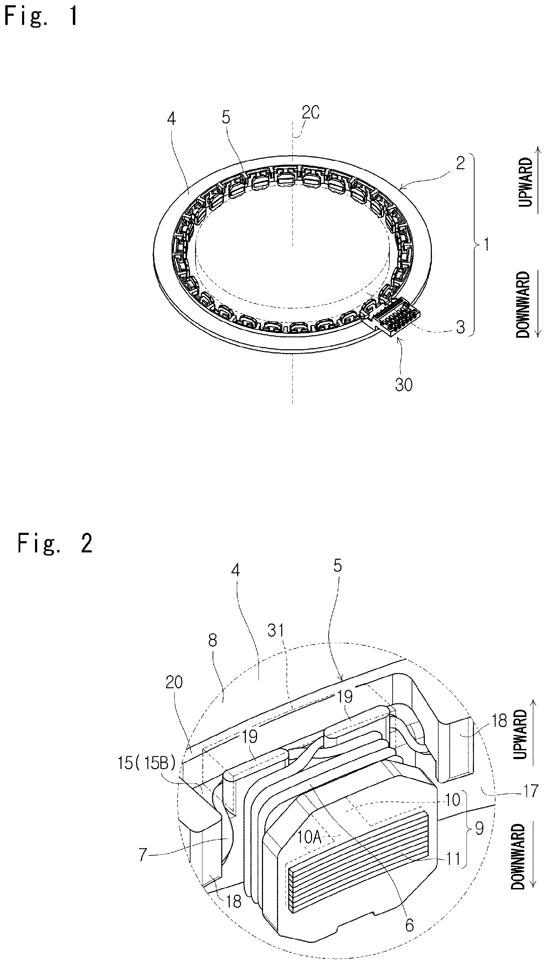

A first embodiment is described hereinafter with reference to Figs. 1 to 5. Fig. 1 shows a resolver 1 for measuring the angle and the rotational speed of a shaft of an electric motor, an internal combustion engine or the like, which are not shown. The resolver 1 includes an annular resolver stator 2 and a resolver rotor 3 fixed to the shaft. The resolver 1 according to this embodiment is a so-called inner rotor type where the resolver rotor 3 is located radially inward of the resolver stator 2. Fig. 1 shows a rotation axis 2C of the resolver stator 2.

Hereinafter, "radial direction" means the radial direction of the resolver stator 2, and "circumferential direction" means the circumferential direction of the resolver stator 2 as a general rule. Further, the resolver stator 2 has an upward direction (first axis direction) parallel to the rotation axis 2C and a downward direction (second axis direction) opposite to the upward direction. A vertical direction includes the upward direction and the downward direction. "The upper side" means an upward side. "The lower side" means a downward side. Further, "planar view" means a view along the rotation axis 2C.

As shown in Figs. 1 to 3, the resolver stator 2 includes a stator core 4, an insulator 5 (resin function part), a plurality of coils 6, a plurality of connecting wires 7, and an external connection part 30.

### (Stator Core 4)

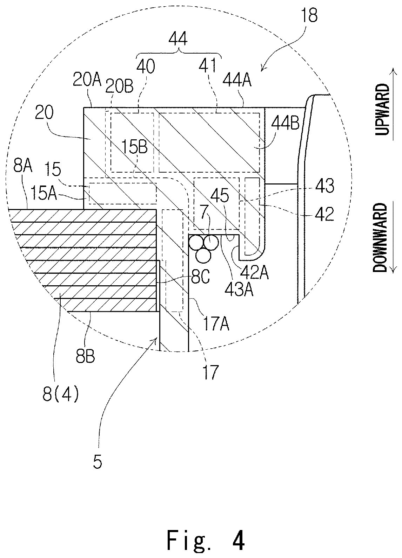

As shown in Fig. 2, the stator core 4 is a laminate of electromagnetic steel sheets. The stator core 4 includes an annular yoke 8 and a plurality of teeth 9 projecting radially inward from the yoke 8. Each of the teeth 9 includes a tooth winding part 10 and a tooth end part 11. The tooth winding part 10 extends from the yoke 8 toward the rotation axis 2C. The tooth winding part 10 extends along the radial direction. The tooth winding part 10 extends radially inward. The tooth end part 11 is located at an end 10A of the tooth winding part 10 and extends along the circumferential direction. As shown in Fig. 4, the yoke 8 has a yoke upper surface 8A (yoke end surface) facing upward, a yoke lower surface 8B facing downward, and a yoke inner peripheral surface 8C facing radially inward.

### (Coil 6)

Referring back to Fig. 2, each of the coils 6 is wound on the tooth winding part 10 of each of the teeth 9. Each of the coils 6 includes an exciting coil and an output coil.

A coil external space 31 is defined as below. The coil external space 31 is a space located radially outward of each of the coils 6 and located on the upper side of the stator core 4. The resolver stator 2 has a plurality of coil external spaces 31. Each of the coil external spaces 31 is opposite to a respective one of the coils 6 in the radial direction.

### (Connecting Wire 7)

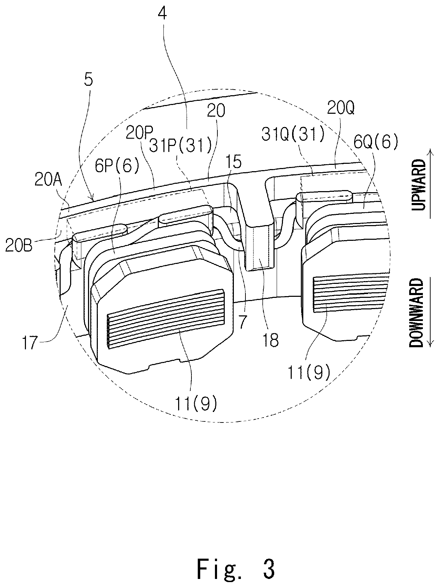

As shown in Fig. 3, each of the connecting wires 7 electrically connects the plurality of coils 6 with each other. To be specific, some connecting wires 7 electrically connect a plurality of exciting coils included in the plurality of coils 6 with each other, and some other connecting wires 7 electrically connect a plurality of output coils included in the plurality of coils 6 with each other. As shown in Fig. 3, the plurality of coils 6 include a first coil 6P and a second coil 6Q adjacent to each other in the circumferential direction. At least part of each connecting wire 7 extends from a first coil external space 31P, which is the coil external space 31 corresponding to the first coil 6P, to a second coil external space 31Q, which is the coil external space 31 corresponding to the second coil 6Q. At least part of each connecting wire 7 extends from the first coil external space 31P, which is the coil external space 31 located radially outward of the first coil 6P, to the second coil external space 31Q, which is the coil external space 31 located radially outward of the second coil 6Q.

### (Insulator 5)

The insulator 5 is made of insulating resin and fixed to the stator core 4 by insert molding, for example. The insulator 5 is placed mainly to prevent the plurality of coils 6 and the plurality of connecting wires 7 from coming into direct contact with the stator core 4. As shown in Fig. 2, the insulator 5 has a yoke upper surface cover part 15 (yoke end surface cover part) and a yoke inner peripheral surface cover part 17. The insulator 5 further has a plurality of guide hooks 18 and a plurality of guide pins 19 (guide protrusions). The insulator 5 further has an outer peripheral wall 20.

As shown in Fig. 4, the yoke upper surface cover part 15 is placed on the yoke upper surface 8A so as to cover the yoke upper surface 8A. The yoke inner peripheral surface cover part 17 is placed on the yoke inner peripheral surface 8C so as to cover the yoke inner peripheral surface 8C. Thus, the yoke upper surface cover part 15 and the yoke inner peripheral surface cover part 17 form an L shape in cross section. The yoke upper surface cover part 15 and the yoke inner peripheral surface cover part 17 are formed in an annular shape, just like the annular yoke 8. In this embodiment, the yoke inner peripheral surface cover part 17 extends downward of the yoke lower surface 8B. The yoke inner peripheral surface cover part 17 has an inner peripheral surface 17A facing radially inward.

As shown in Fig. 2, the outer peripheral wall 20 is formed to project upward from the yoke upper surface cover part 15. The outer peripheral wall 20 is formed in an annular shape, just like the annular yoke 8. The outer peripheral wall 20 is formed along the annular yoke 8. The outer peripheral wall 20 is located radially outward of each of the coils 6. As shown in Fig. 4, the outer peripheral wall 20 is formed to project upward from an outer end 15A of the yoke upper surface cover part 15. As shown in Fig. 3, the outer peripheral wall 20 has an outer peripheral wall upper surface 20A (outer peripheral wall end surface) facing upward and an outer peripheral wall inner peripheral surface 20B facing radially inward. The outer peripheral wall 20 includes a first outer peripheral wall 20P that is opposite the first coil 6P in the radial direction and a second outer peripheral wall 20Q that is opposite the second coil 6Q in the radial direction. Both of the first outer peripheral wall 20P and the second outer peripheral wall 20Q extend in an arc form in a planar view. The first outer peripheral wall 20P and the second outer peripheral wall 20Q are joined to each other in a seamless manner. Thus, the first outer peripheral wall 20P and the second outer peripheral wall 20Q form one arc in a planar view. In other words, the outer peripheral wall 20 that includes the first outer peripheral wall 20P and the second outer peripheral wall 20Q extends in an arc form in a planar view. The first coil 6P, the first coil external space 31P and the first outer peripheral wall 20P are arranged in this order in the radial direction. The first coil 6P, the first coil external space 31P and the first outer peripheral wall 20P are arranged radially outward in this order. Likewise, the second coil 6Q, the second coil external space 31Q and the second outer peripheral wall 20Q are arranged in this order in the radial direction. The second coil 6Q, the second coil external space 31Q and the second outer peripheral wall 20Q are arranged radially outward in this order.

Subsequently, as shown then in Fig. 3, one guide hook 18 is placed between two coils 6 adjacent in the circumferential direction. Specifically, one guide hook 18 is placed between the first coil external space 31P and the second coil external space 31Q adjacent to each other in the circumferential direction. Each guide hook 18 is placed to be visible from the point of view of the rotation axis 2C of the resolver stator 2. When viewed from the rotation axis 2C of the resolver stator 2, each guide hook 18 is placed separately in the circumferential direction from the tooth end part 11 of the two teeth 9 adjacent in the circumferential direction. That is, each guide hook 18 does not overlap with the tooth end part 11 of each tooth 9 in the radial direction. Each guide hook 18 is located radially inward of the outer peripheral wall 20.

Each guide hook 18 guides the connecting wire 7 extending from the first coil external space 31P to the second coil external space 31Q. Each connecting wire 7 is curved to be convex downward by being caught on one guide hook 18 while extending from the first coil external space 31P to the second coil external space 31Q. Each connecting wire 7 is curved to be convex downward by being guided by one guide hook 18 while extending from the first coil external space 31P to the second coil external space 31Q.

Specifically, as shown in Fig. 4, each guide hook 18 includes a hook reinforcement part 40, a hook protrusion part 41, a hook body 42, and a hook curve adjustment part 43. Hereinafter, refer also to Figs. 2 and 3 if necessary.

As shown in Fig. 4, the hook reinforcement part 40 projects upward from the yoke upper surface cover part 15. The hook reinforcement part 40 projects radially inward from the outer peripheral wall inner peripheral surface 20B of the outer peripheral wall 20. In other words, the hook reinforcement part 40 extends along the radial direction to reach the outer peripheral wall inner peripheral surface 20B of the outer peripheral wall 20, and is joined to the outer peripheral wall inner peripheral surface 20B of the outer peripheral wall 20 in a seamless manner.

The hook protrusion part 41 projects radially inward from the hook reinforcement part 40.

The hook reinforcement part 40 and the hook protrusion part 41 form a hook beam part 44. The hook beam part 44 extends along the radial direction. The hook beam part 44 is fixed in a cantilever form to the yoke upper surface cover part 15. To be specific, the hook beam part 44 is fixed in a cantilever form to a cover upper surface 15B (cover end surface, refer also to Fig. 2), which is an end surface of the yoke upper surface cover part 15 and faces upward. The hook beam part 44 extends radially outward to reach the outer peripheral wall inner peripheral surface 20B of the outer peripheral wall 20 and is joined to the outer peripheral wall inner peripheral surface 20B of the outer peripheral wall 20 in a seamless manner. The hook beam part 44 extends radially inward beyond the yoke inner peripheral surface cover part 17. Thus, the hook beam part 44 is fixed to the cover upper surface 15B of the yoke upper surface cover part 15 and extends radially inward. The hook beam part 44 is solid. The hook beam part 44 has a hook beam upper surface 44A (hook beam end surface) facing upward. The hook beam upper surface 44A of the hook beam part 44 is in the same plane as the outer peripheral wall upper surface 20A of the outer peripheral wall 20.

The hook body 42 projects downward from a distal end 44B of the hook beam part 44. The hook body 42 projects downward and is thereby opposite the yoke inner peripheral surface cover part 17 in the radial direction with a gap therebetween. The hook body 42 has an outer surface 42A facing radially outward.

The hook curve adjustment part 43 projects downward from the hook beam part 44 between the hook body 42 and the yoke inner peripheral surface cover part 17. The hook curve adjustment part 43 has a lower surface 43A facing downward.

The outer surface 42A of the hook body 42, the lower surface 43A of the hook curve adjustment part 43 and the inner peripheral surface 17A of the yoke inner peripheral surface cover part 17 form an accommodating groove 45 that opens downward. Each of the connecting wires 7 is opposite the yoke inner peripheral surface cover part 17 in the radial direction, opposite the hook body 42 in the radial direction, and opposite the hook beam part 44 in the vertical direction while extending from the first coil external space 31P to the second coil external space 31Q. Each of the connecting wires 7 is accommodated in the accommodating groove 45 while extending from the first coil external space 31P to the second coil external space 31Q. Specifically, each of the connecting wires 7 passes on the radially inner side of the yoke inner peripheral surface cover part 17, passes on the lower side of the hook beam part 44, and passes on the radially outer side of the hook body 42 while extending from the first coil external space 31P to the second coil external space 31Q.

As shown in Fig. 4, three connecting wires 7 are accommodated in one accommodating groove 45 in this embodiment. However, the number of connecting wires 7 accommodated in one accommodating groove 45 increases or decreases depending on the number of phases on the excitation side, the number of phases on the output side, the way to wind a winding or the like.

As shown in Fig. 2, each of the guide pins 19 is located radially outward of each of the coils 6. In this embodiment, two guide pins 19 are located radially outward of one coil 6. Specifically, the two guide pins 19 are opposite one coil 6 in the radial direction. The two guide pins 19 are adjacent to one coil 6 in the radial direction. The two guide pins 19 are slightly separately formed from each other in the circumferential direction. The two guide pins 19 are opposite each other in the circumferential direction. Each of the guide pins 19 guides the connecting wire 7. Each of the guide pins 19 projects upward from the yoke upper surface cover part 15. Each of the guide pins 19 is in a flat plate form. The thickness direction of each guide pin 19 is parallel to the projecting direction of the tooth winding part 10 of the nearest tooth 9. Note that the thickness direction of each guide pin 19 may be parallel to the radial direction. Further, each of the guide pins 19 may be in a curved plate form extending along the circumferential direction, instead of having a flat plate form as in this embodiment.

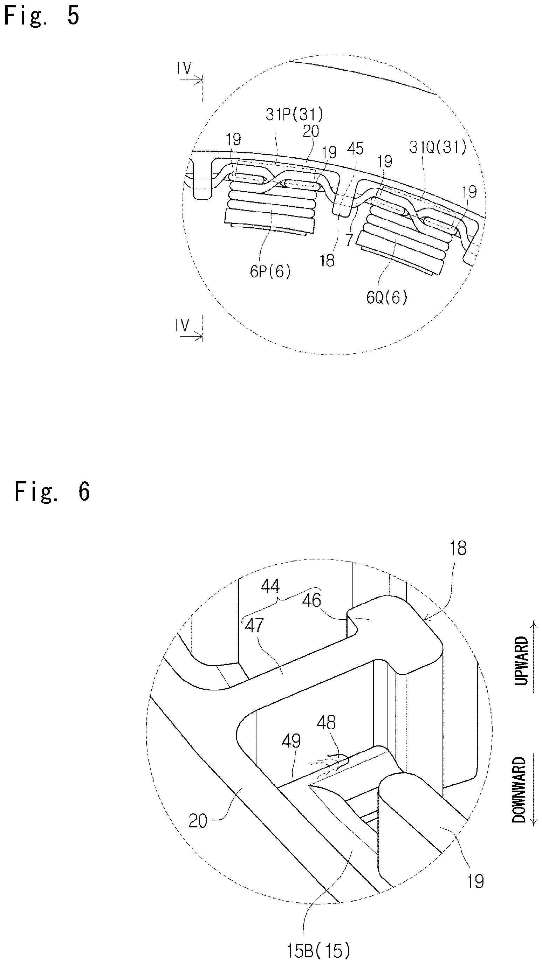

The arrangement of the connecting wires 7 is described in detail hereinafter with reference to Fig. 5. In Fig. 5, the connecting wire 7 that extends from the first coil external space 31P to the second coil external space 31Q sequentially passes through (1) the gap between the outer peripheral wall 20 and the guide pin 19 closer to the second coil 6Q out of the two guide pins 19 that are opposite the first coil 6P in the radial direction, (2) the accommodating groove 45 of the guide hook 18 located between the first coil 6P and the second coil 6Q, and (3) the gap between the outer peripheral wall 20 and the guide pin 19 closer to the first coil 6P out of the two guide pins 19 that are opposite the second coil 6Q in the radial direction. The connecting wire 7 is caught on the guide pin 19 and passes on the radially outer side of the guide pin 19 and is thereby curved to be convex radially outward. Further, the connecting wire 7 is caught on the guide hook 18 and passes through the accommodating groove 45 of the guide hook 18 and is thereby curved to be convex downward. Since the connecting wire 7 is caught on the guide hook 18 and passes through the accommodating groove 45 of the guide hook 18, the connecting wire 7 caught on the guide hook 18 cannot be easily touched from below, thereby achieving the resolver stator 2 where the connecting wire 7 is not likely to be damaged.

### (External Connection Part 30)

The external connection part 30 is described with reference to Fig. 1. As shown in Fig. 1, the external connection part 30 is a part that holds the ends of the plurality of connecting wires 7 in order to receive input of an excitation signal from the outside and to output a detection signal generated by the resolver stator 2 to the outside.

The first embodiment is described above. The above-described first embodiment has the following features.

As shown in Figs. 1 to 5, the resolver stator 2 includes the stator core 4, the plurality of coils 6, the connecting wire 7, and the insulator 5 (resin function part). The stator core 4 includes the annular yoke 8 and the plurality of teeth 9 projecting radially inward from the yoke 8. Each of the plurality of coils 6 is wound on each of the plurality of teeth 9. The connecting wire 7 electrically connects the plurality of coils 6 with each other. The insulator 5 is made of insulating resin and fixed to the stator core 4. The resolver stator 2 has the upward direction (first axis direction) parallel to the rotation axis 2C of the resolver stator 2 and the downward direction (second axis direction) opposite to the upward direction. The plurality of coils 6 include the first coil 6P and the second coil 6Q adjacent to each other in the circumferential direction. At least part of the connecting wire 7 extends from the first coil external space 31P, which is located radially outward of the first coil 6P and on the upper side of the stator core 4, to the second coil external space 31Q, which is located radially outward of the second coil 6Q and on the upper side of the stator core 4. The yoke 8 has the yoke upper surface 8A (yoke end surface) facing upward and the yoke inner peripheral surface 8C facing radially inward. The insulator 5 has the yoke upper surface cover part 15 (yoke end surface cover part) that covers the yoke upper surface 8A, the yoke inner peripheral surface cover part 17 that covers the yoke inner peripheral surface 8C, the outer peripheral wall 20 that projects upward from the yoke upper surface cover part 15, and the guide hook 18 that is located radially inward of the outer peripheral wall 20 and guides the connecting wire 7. The connecting wire 7 is curved to be convex downward by being caught on the guide hook 18 while extending from the first coil external space 31P to the second coil external space 31Q. The outer peripheral wall 20 includes the first outer peripheral wall 20P that is opposite the first coil 6P in the radial direction and the second outer peripheral wall 20Q that is opposite the second coil 6Q in the radial direction. The first outer peripheral wall 20P and the second outer peripheral wall 20Q are joined to each other in a seamless manner. The guide hook 18 includes the hook beam part 44 that is fixed to the cover upper surface 15B (cover end surface) facing upward of the yoke upper surface cover part 15 and extends radially inward, and the hook body 42 that projects downward from the hook beam part 44 and is opposite the yoke inner peripheral surface cover part 17 in the radial direction. In this structure, the strength of the guide hook 18 is improved compared with the structure in which the hook beam part 44 is not included and the hook body 42 is supported only by the yoke inner peripheral surface cover part 17. Thus, the guide hook 18 is less likely to be deformed or damaged when catching the connecting wire 7 on the guide hook 18 by an automatic winding machine. The connecting wire 7 can thereby be caught on the guide hook 18 with appropriate tension, and therefore the problems such as coming off of the connecting wire 7 from the guide hook 18 or cutting off due to vibration of the connecting wire 7 that has come off are less likely to occur. Further, because the strength of the guide hook 18 is improved, the guide hook 18 can be made thinner in the circumferential direction, which leads to effects such as allowing (1) reduction of the distance between two adjacent teeth 9 and (2) reduction of the diameter of the resolver stator 2.

Further, as shown in Fig. 4, the hook beam part 44 extends to reach the outer peripheral wall 20. The hook beam part 44 and the outer peripheral wall 20 are joined to each other in a seamless manner. In this structure, the strength of the guide hook 18 is further improved compared with the structure in which a gap remains between the hook beam part 44 and the outer peripheral wall 20.

Further, as shown in Fig. 4, the outer peripheral wall upper surface 20A (outer peripheral wall end surface) facing upward of the outer peripheral wall 20 and the hook beam upper surface 44A (hook beam end surface) facing upward of the hook beam part 44 are in the same plane. In this structure, the vertically compact resolver stator 2 is achieved.

The above-described first embodiment can be modified as follows.

Specifically, in Fig. 2, the connecting wire 7 may be fixed to the insulator 5 by injecting adhesive into the space surrounded by the two guide pins 19 that are opposite one coil 6 in the radial direction, the two guide hooks 18 placed on both sides of the two guide pins 19 in the circumferential direction, and the outer peripheral wall 20.

Further, only one guide pin 19 may be opposite one coil 6 in the radial direction, instead of the two guide pins 19 being opposite one coil 6 in the radial direction.

Further, the external connection part 30 may be integrally formed with the insulator 5 or separately formed from the insulator 5.

Further, in Fig. 4, the hook curve adjustment part 43 may be omitted. When the hook curve adjustment part 43 is omitted, the accommodating groove 45 is formed by the outer surface 42A of the hook body 42, the lower surface of the hook protrusion part 41 of the hook beam part 44, and the inner peripheral surface 17A of the yoke inner peripheral surface cover part 17. Also in this case, each connecting wire 7 is curved to be convex downward by being caught on one guide hook 18 while extending from the first coil external space 31P to the second coil external space 31Q. This is because each connecting wire 7 passes on the upper side of the cover upper surface 15B of the yoke upper surface cover part 15 both when passing through the first coil external space 31P and when passing through the second coil external space 31Q as shown in Figs. 2 to 4.

### (Modified Example)

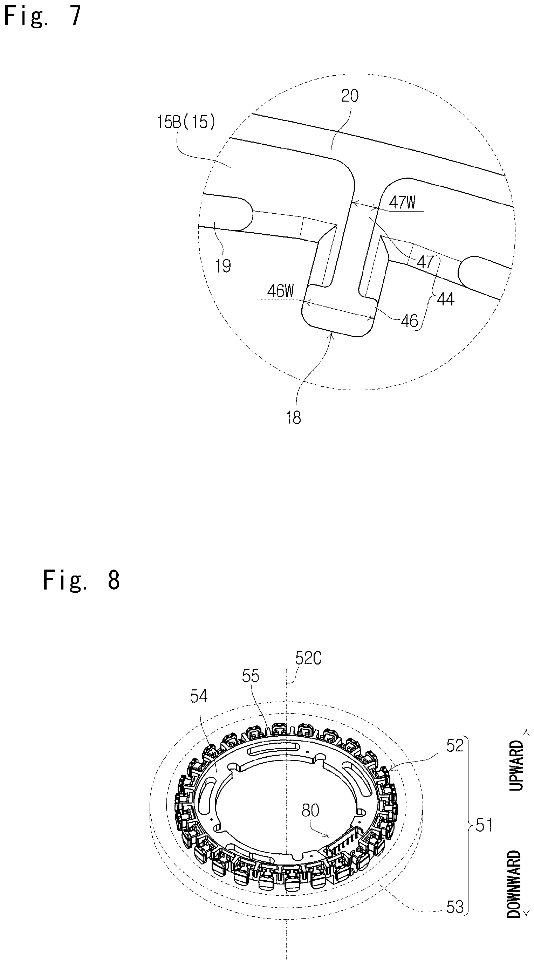

A modified example of the above-described first embodiment is described hereinafter with reference to Figs. 6 and 7.

In the first embodiment, the width dimension of the hook beam part 44 of the guide hook 18 is constant regardless of the distance from the outer peripheral wall 20 as shown in Figs. 4 and 5, for example. The width dimension of the hook beam part 44 of the guide hook 18 means the dimension of the hook beam part 44 of the guide hook 18 in the direction orthogonal to the radial direction in a planar view.

Alternatively, in this modified example, the hook beam part 44 of the guide hook 18 includes an inner hook beam part 46 and an outer hook beam part 47 located radially outward of the inner hook beam part 46 as shown in Figs. 6 and 7. As shown in Fig. 7, a width dimension 47W of the outer hook beam part 47 is smaller than a width dimension 46W of the inner hook beam part 46. The width dimension 46W of the inner hook beam part 46 means the dimension of the inner hook beam part 46 in the direction orthogonal to the radial direction in a planar view. Likewise, the width dimension 47W of the outer hook beam part 47 means the dimension of the outer hook beam part 47 in the direction orthogonal to the radial direction in a planar view. In this way, by reducing the width dimension 47W of the outer hook beam part 47 in a positive manner, the hook beam part 44 in the guide hook 18 becomes likely to be solidified prior to the other parts during solidification shrinkage of the insulator 5. Therefore, the linear shape of the hook beam part 44 of the guide hook 18 becomes fixed preferentially before the other parts, which effectively prevents unintended deformation of the guide hook 18 during solidification shrinkage.

Further, as shown in Figs. 6 and 7, the cover upper surface 15B extends to project inward along the hook beam part 44. In this structure, when injecting an adhesive 48 between the guide pin 19 and the outer peripheral wall 20, the adhesive 48 runs along a boundary 49 between the hook beam part 44 and the cover upper surface 15B. In this modified example, because the cover upper surface 15B extends to project inward along the hook beam part 44, the length of the boundary 49 is effectively reserved, and thereby making it possible to hold a large amount of the adhesive 48 along the boundary 49 and control downward flow of the adhesive 48.

### <Second Embodiment>

A second embodiment is described hereinafter with reference to Figs. 8 to 12. Fig. 8 shows a resolver 51 for measuring the angle and the rotational speed of a shaft of an electric motor, an internal combustion engine or the like, which are not shown. The resolver 51 includes an annular resolver stator 52 and a resolver rotor 53 fixed to a rotating body such as the shaft. The resolver 51 according to this embodiment is a so-called outer rotor type where the resolver rotor 53 is located radially outward of the resolver stator 52. Fig. 8 shows a rotation axis 52C of the resolver stator 52.

Hereinafter, "radial direction" means the radial direction of the resolver stator 52, and "circumferential direction" means the circumferential direction of the resolver stator 52 as a general rule. Further, the resolver stator 52 has an upward direction (first axis direction) parallel to the rotation axis 52C and a downward direction (second axis direction) opposite to the upward direction. A vertical direction includes the upward direction and the downward direction. "The upper side" means an upward side. "The lower side" means a downward side. Further, "planar view" means is a view along the rotation axis 52C.

As shown in Figs. 8 to 10, the resolver stator 52 includes a stator core 54, an insulator 55 (resin function part), a plurality of coils 56, a plurality of connecting wires 57, and an external connection part 80.

### (Stator Core 54)

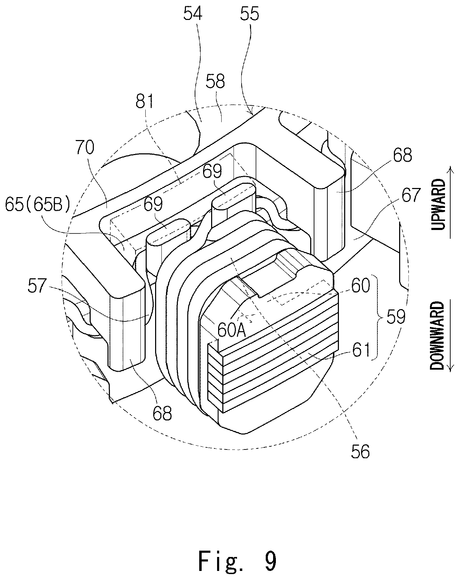

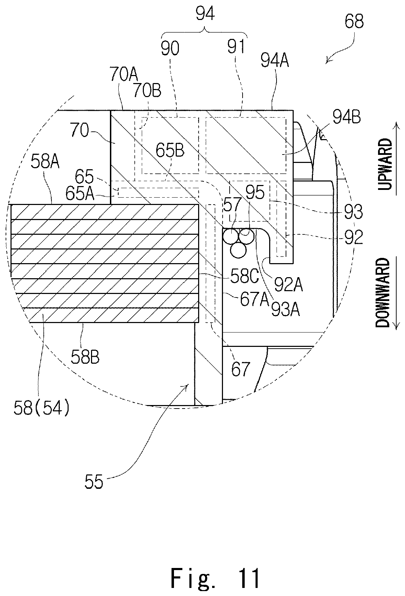

As shown in Fig. 9, the stator core 54 is a laminate of electromagnetic steel sheets. The stator core 54 includes an annular yoke 58 and a plurality of teeth 59 projecting radially outward from the yoke 58. Each of the teeth 59 includes a tooth winding part 60 and a tooth end part 61. The tooth winding part 60 extends from the yoke 58 to separate from the rotation axis 52C. The tooth winding part 60 extends along the radial direction. The tooth winding part 60 extends radially outward. The tooth end part 61 is placed at an end 60A of the tooth winding part 60 and extends along the circumferential direction. As shown in Fig. 11, the yoke 58 has a yoke upper surface 58A (yoke end surface) facing upward, a yoke lower surface 58B facing downward, and a yoke outer peripheral surface 58C facing radially outward.

### (Coil 56)

Referring back to Fig. 9, each of the coils 56 is wound on the tooth winding part 60 of each of the teeth 59. Each of the coils 56 includes an exciting coil and an output coil.

A coil internal space 81 is defined as below. The coil internal space 81 is a space located radially inward of each of the coils 56 and located on the upper side of the stator core 54. The resolver stator 52 has a plurality of coil internal spaces 81. Each of the coil internal spaces 81 is opposite to a respective one of the coils 56 in the radial direction.

### (Connecting Wire 57)

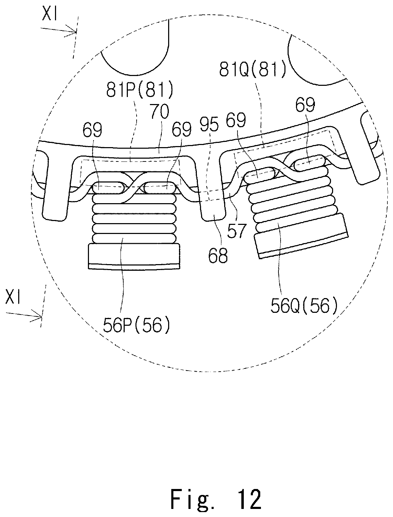

As shown in Fig. 12, each of the connecting wires 57 electrically connects the plurality of coils 56 with each other. To be specific, some connecting wires 57 electrically connect a plurality of exciting coils included in the plurality of coils 56 with each other, and some other connecting wires 57 electrically connect a plurality of output coils included in the plurality of coils 56 with each other. As shown in Fig. 12, the plurality of coils 56 include a first coil 56P and a second coil 56Q adjacent to each other in the circumferential direction. At least part of each connecting wire 57 extends from a first coil internal space 81P, which is the coil internal space 81 corresponding to the first coil 56P, to a second coil internal space 81Q, which is the coil internal space 81 corresponding to the second coil 56Q. At least part of each connecting wire 57 extends from the first coil internal space 81P, which is the coil internal space 81 located radially inward of the first coil 56P, to the second coil internal space 81Q, which is the coil internal space 81 located radially inward of the second coil 56Q.

### (Insulator 55)

The insulator 55 is made of insulating resin and fixed to the stator core 54 by insert molding, for example. The insulator 55 is placed mainly to prevent the plurality of coils 56 and the plurality of connecting wires 57 from coming into direct contact with the stator core 54. As shown in Fig. 9, the insulator 55 has a yoke upper surface cover part 65 (yoke end surface cover part) and a yoke outer peripheral surface cover part 67. The insulator 55 further has a plurality of guide hooks 68 and a plurality of guide pins 69 (guide protrusions). The insulator 55 further has an inner peripheral wall 70.

As shown in Fig. 11, the yoke upper surface cover part 65 is placed on the yoke upper surface 58A so as to cover the yoke upper surface 58A. The yoke outer peripheral surface cover part 67 is placed on the yoke outer peripheral surface 58C so as to cover the yoke outer peripheral surface 58C. Thus, the yoke upper surface cover part 65 and the yoke outer peripheral surface cover part 67 form an L shape in cross section. The yoke upper surface cover part 65 and the yoke outer peripheral surface cover part 67 are formed in an annular shape, just like the annular yoke 58. In this embodiment, the yoke outer peripheral surface cover part 67 extends downward of the yoke lower surface 58B. The yoke outer peripheral surface cover part 67 has an outer peripheral surface 67A facing radially outward.

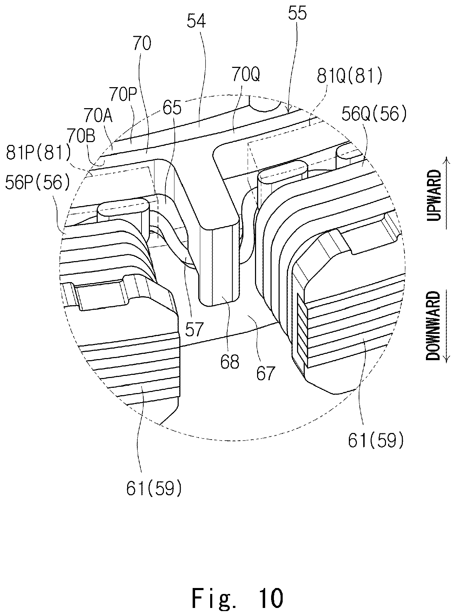

As shown in Fig. 9, the inner peripheral wall 70 is formed to project upward from the yoke upper surface cover part 65. The inner peripheral wall 70 is formed in an annular shape, just like the annular yoke 58. The inner peripheral wall 70 is formed along the annular yoke 58. The inner peripheral wall 70 is located radially inward of each of the coils 56. As shown in Fig. 11, the inner peripheral wall 70 is formed to project upward from an inner end 65A of the yoke upper surface cover part 65. As shown in Fig. 10, the inner peripheral wall 70 has an inner peripheral wall upper surface 70A (inner peripheral wall end surface) facing upward and an inner peripheral wall outer peripheral surface 70B facing radially outward. The inner peripheral wall 70 includes a first inner peripheral wall 70P that is opposite the first coil 56P in the radial direction and a second inner peripheral wall 70Q that is opposite the second coil 56Q in the radial direction. Both of the first inner peripheral wall 70P and the second inner peripheral wall 70Q extend in an arc form in a planar view. The first inner peripheral wall 70P and the second inner peripheral wall 70Q are joined to each other in a seamless manner. Thus, the first inner peripheral wall 70P and the second inner peripheral wall 70Q form one arc in a planar view. In other words, the inner peripheral wall 70 that includes the first inner peripheral wall 70P and the second inner peripheral wall 70Q extends in an arc form in a planar view. The first coil 56P, the first coil internal space 81P and the first inner peripheral wall 70P are arranged in this order in the radial direction. The first coil 56P, the first coil internal space 81P and the first inner peripheral wall 70P are arranged radially inward in this order. Likewise, the second coil 56Q, the second coil internal space 81Q and the second inner peripheral wall 70Q are arranged in this order in the radial direction. The second coil 56Q, the second coil internal space 81Q and the second inner peripheral wall 70Q are arranged radially inward in this order.

Subsequently, as shown then in Fig. 10, one guide hook 68 is located between two coils 56 adjacent in the circumferential direction. Specifically, one guide hook 68 is located between the first coil internal space 81P and the second coil internal space 81Q adjacent to each other in the circumferential direction. Each guide hook 68 is placed separately in the circumferential direction from the tooth end part 61 of the two teeth 59 adjacent in the circumferential direction. That is, each guide hook 68 does not overlap with the tooth end part 61 of each tooth 59 in the radial direction. Each guide hook 68 is located radially outward of the inner peripheral wall 70.

Each guide hook 68 guides the connecting wire 57 extending from the first coil internal space 81P to the second coil internal space 81Q. Each connecting wire 57 is curved to be convex downward by being caught on one guide hook 68 while extending from the first coil internal space 81P to the second coil internal space 81Q. Each connecting wire 57 is curved to be convex downward by being guided by one guide hook 68 while extending from the first coil internal space 81P to the second coil internal space 81Q.

Specifically, as shown in Fig. 11, each guide hook 68 includes a hook reinforcement part 90, a hook protrusion part 91, a hook body 92, and a hook curve adjustment part 93. Hereinafter, refer also to Figs. 9 and 10 if necessary.

As shown in Fig. 11, the hook reinforcement part 90 projects upward from the yoke upper surface cover part 65. The hook reinforcement part 90 projects radially outward from the inner peripheral wall outer peripheral surface 70B of the inner peripheral wall 70. In other words, the hook reinforcement part 90 extends along the radial direction to reach the inner peripheral wall outer peripheral surface 70B of the inner peripheral wall 70, and is joined to the inner peripheral wall outer peripheral surface 70B of the inner peripheral wall 70 in a seamless manner.

The hook protrusion part 91 projects radially outward from the hook reinforcement part 90.

The hook reinforcement part 90 and the hook protrusion part 91 form a hook beam part 94. The hook beam part 94 extends along the radial direction. The hook beam part 94 is fixed in a cantilever form to the yoke upper surface cover part 65. To be specific, the hook beam part 94 is fixed in a cantilever form to a cover upper surface 65B (cover end surface, refer also to Fig. 9), which is an end surface of the yoke upper surface cover part 65 and faces upward. The hook beam part 94 extends radially inward to reach the inner peripheral wall outer peripheral surface 70B of the inner peripheral wall 70 and is joined to the inner peripheral wall outer peripheral surface 70B of the inner peripheral wall 70 in a seamless manner. The hook beam part 94 extends radially outward beyond the yoke outer peripheral surface cover part 67. Thus, the hook beam part 94 is fixed to the cover upper surface 65B of the yoke upper surface cover part 65 and extends radially outward. The hook beam part 94 is solid. The hook beam part 94 has a hook beam upper surface 94A (hook beam end surface) facing upward. The hook beam upper surface 94A of the hook beam part 94 is in the same plane as the inner peripheral wall upper surface 70A of the inner peripheral wall 70.

The hook body 92 projects downward from a distal end 94B of the hook beam part 94. The hook body 92 projects downward and is thereby opposite the yoke outer peripheral surface cover part 67 in the radial direction with a gap therebetween. The hook body 92 has an inner surface 92A facing radially inward.

The hook curve adjustment part 93 projects downward from the hook beam part 94 between the hook body 92 and the yoke outer peripheral surface cover part 67. The hook curve adjustment part 93 has a lower surface 93A facing downward.

The inner surface 92A of the hook body 92, the lower surface 93A of the hook curve adjustment part 93 and the outer peripheral surface 67A of the yoke outer peripheral surface cover part 67 form an accommodating groove 95 that opens downward. Each of the connecting wires 57 is opposite the yoke outer peripheral surface cover part 67 in the radial direction, opposite the hook body 92 in the radial direction, and opposite the hook beam part 94 in the vertical direction while extending from the first coil internal space 81P to the second coil internal space 81Q. Each of the connecting wires 57 is accommodated in the accommodating groove 95 while extending from the first coil internal space 81P to the second coil internal space 81Q. Specifically, each of the connecting wires 57 passes on the radially outer side of the yoke outer peripheral surface cover part 67, passes on the lower side of the hook beam part 94, and passes on the radially inner side of the hook body 92 while extending from the first coil internal space 81P to the second coil internal space 81Q.

As shown in Fig. 11, three connecting wires 57 are accommodated in one accommodating groove 95 in this embodiment. However, the number of connecting wires 57 accommodated in one accommodating groove 95 increases or decreases depending on the number of phases on the excitation side, the number of phases on the output side, the way to wind a winding or the like.

As shown in Fig. 9, each of the guide pins 69 is located radially inward of each of the coils 56. In this embodiment, two guide pins 69 are located radially inward of one coil 56. Specifically, the two guide pins 69 are opposite one coil 56 in the radial direction. The two guide pins 69 are adjacent to one coil 56 in the radial direction. The two guide pins 69 are slightly separately formed from each other in the circumferential direction. The two guide pins 69 are opposite each other in the circumferential direction. Each of the guide pins 69 guides the connecting wire 57. Each of the guide pins 69 projects upward from the yoke upper surface cover part 65. Each of the guide pins 69 is in a flat plate form. The thickness direction of each guide pin 69 is parallel to the projecting direction of the tooth winding part 60 of the nearest tooth 59. Note that the thickness direction of each guide pin 69 may be parallel to the radial direction. Further, each of the guide pins 69 may be in a curved plate form extending along the circumferential direction, instead of having a flat plate form as in this embodiment.

The arrangement of the connecting wires 57 is described in detail hereinafter with reference to Fig. 12. In Fig. 12, the connecting wire 57 that extends from the first coil internal space 81P to the second coil internal space 81Q sequentially passes through (1) the gap between the inner peripheral wall 70 and the guide pin 69 closer to the second coil 56Q out of the two guide pins 69 that are opposite the first coil 56P in the radial direction, (2) the accommodating groove 95 of the guide hook 68 located between the first coil 56P and the second coil 56Q, and (3) the gap between the inner peripheral wall 70 and the guide pin 69 closer to the first coil 56P out of the two guide pins 69 that are opposite the second coil 56Q in the radial direction. The connecting wire 57 is caught on the guide pin 69 and passes on the radially inner side of the guide pin 69 and is thereby curved to be convex radially inward. Further, the connecting wire 57 is caught on the guide hook 68 and passes through the accommodating groove 95 of the guide hook 68 and is thereby curved to be convex downward. Since the connecting wire 57 is caught on the guide hook 68 and passes through the accommodating groove 95 of the guide hook 68, the connecting wire 57 caught on the guide hook 68 cannot be easily touched from below, thereby achieving the resolver stator 52 where the connecting wire 57 is not likely to be damaged.

### (External connection part 80)

The external connection part 80 is described with reference to Fig. 8. As shown in Fig. 8, the external connection part 80 is a part that holds the ends of the plurality of connecting wires 57 in order to receive input of an excitation signal from the outside and to output a detection signal generated by the resolver stator 52 to the outside.

The second embodiment is described above. The above-described second embodiment has the following features.

As shown in Figs. 8 to 12, the resolver stator 52 includes the stator core 54, the plurality of coils 56, the connecting wire 57, and the insulator 55 (resin function part). The stator core 54 includes the annular yoke 58 and the plurality of teeth 59 projecting radially outward from the yoke 58. Each of the plurality of coils 56 is wound on each of the plurality of teeth 59. The connecting wire 57 electrically connects the plurality of coils 56 with each other. The insulator 55 is made of insulating resin and fixed to the stator core 54. The resolver stator 52 has the upward direction (first axis direction) parallel to the rotation axis 52C of the resolver stator 52 and the downward direction (second axis direction) opposite to the upward direction. The plurality of coils 56 include the first coil 56P and the second coil 56Q adjacent to each other in the circumferential direction. At least part of the connecting wire 57 extends from the first coil internal space 81P, which is located radially inward of the first coil 56P and on the upper side of the stator core 54, to the second coil internal space 81Q, which is located radially inward of the second coil 56Q and on the upper side of the stator core 54. The yoke 58 has the yoke upper surface 58A (yoke end surface) facing upward and the yoke outer peripheral surface 58C facing radially outward. The insulator 55 has the yoke upper surface cover part 65 (yoke end surface cover part) that covers the yoke upper surface 58A, the yoke outer peripheral surface cover part 67 that covers the yoke outer peripheral surface 58C, the inner peripheral wall 70 that projects upward from the yoke upper surface cover part 65, and the guide hook 68 that is located radially outward of the inner peripheral wall 70 and guides the connecting wire 57. The connecting wire 57 is curved to be convex downward by being caught on the guide hook 68 while extending from the first coil internal space 81P to the second coil internal space 81Q. The inner peripheral wall 70 includes the first inner peripheral wall 70P that is opposite the first coil 56P in the radial direction and the second inner peripheral wall 70Q that is opposite the second coil 56Q in the radial direction. The first inner peripheral wall 70P and the second inner peripheral wall 70Q are joined to each other in a seamless manner. The guide hook 68 includes the hook beam part 94 that is fixed to the cover upper surface 65B (cover end surface) facing upward of the yoke upper surface cover part 65 and extends radially outward, and the hook body 92 that projects downward from the hook beam part 94 and is opposite the yoke outer peripheral surface cover part 67 in the radial direction. In this structure, the strength of the guide hook 68 is improved compared with the structure in which the hook beam part 94 is not included and the hook body 92 is supported only by the yoke outer peripheral surface cover part 67. Thus, the guide hook 68 is less likely to be deformed or damaged when catching the connecting wire 57 on the guide hook 68 by an automatic winding machine. The connecting wire 57 can thereby be caught on the guide hook 68 with appropriate tension, and therefore the problems such as coming off of the connecting wire 57 from the guide hook 68 or cutting off due to vibration of the connecting wire 57 that has come off are less likely to occur. Further, because the strength of the guide hook 68 is improved, the guide hook 68 can be made thinner in the circumferential direction, which leads to effects such as allowing (1) reduction of the distance between two adjacent teeth 59 and (2) reduction of the diameter of the resolver stator 52.

Further, as shown in Fig. 11, the hook beam part 94 extends to reach the inner peripheral wall 70. The hook beam part 94 and the inner peripheral wall 70 are joined to each other in a seamless manner. In this structure, the strength of the guide hook 68 is further improved compared with the structure in which a gap remains between the hook beam part 94 and the inner peripheral wall 70.

Further, as shown in Fig. 11, the inner peripheral wall upper surface 70A (inner peripheral wall end surface) facing upward of the inner peripheral wall 70 and the hook beam upper surface 94A (hook beam end surface) facing upward of the hook beam part 94 are in the same plane. In this structure, the vertically compact resolver stator 52 is achieved.

The above-described first embodiment can be modified as follows.

Specifically, in Fig. 9, the connecting wire 57 may be fixed to the insulator 55 by injecting adhesive into the space surrounded by the two guide pins 69 that are opposite one coil 56 in the radial direction, the two guide hooks 68 placed on both sides of the two guide pins 69 in the circumferential direction, and the inner peripheral wall 70.

Further, only one guide pin 69 may be opposite one coil 56 in the radial direction, instead of the two guide pins 69 being opposite one coil 56 in the radial direction.

Further, the external connection part 80 may be integrally formed with the insulator 55 or separately formed from the insulator 55.

Further, in Fig. 11, the hook curve adjustment part 93 may be omitted. When the hook curve adjustment part 93 is omitted, the accommodating groove 95 is formed by the inner surface 92A of the hook body 92, the lower surface of the hook protrusion part 91 of the hook beam part 94, and the outer peripheral surface 67A of the yoke outer peripheral surface cover part 67. Also in this case, each connecting wire 57 is curved to be convex downward by being caught on one guide hook 68 while extending from the first coil internal space 81P to the second coil internal space 81Q. This is because each connecting wire 57 passes on the upper side of the cover upper surface 65B of the yoke upper surface cover part 65 both when passing through the first coil internal space 81P and when passing through the second coil internal space 81Q as shown in Figs. 9 to 11.

### (Modified Example)

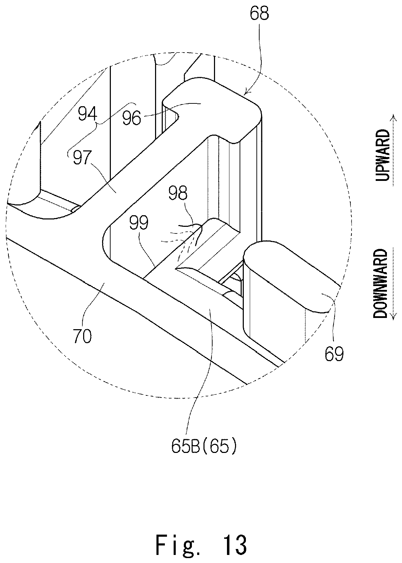

A modified example of the above-described second embodiment is described hereinafter with reference to Figs. 13 and 14.

In the first embodiment, the width dimension of the hook beam part 94 of the guide hook 68 is constant regardless of the distance from the inner peripheral wall 70 as shown in Figs. 11 and 12, for example. The width dimension of the hook beam part 94 of the guide hook 68 means the dimension of the hook beam part 94 of the guide hook 68 in the direction orthogonal to the radial direction in a planar view.

Alternatively, in this modified example, the hook beam part 94 of the guide hook 68 includes an outer hook beam part 96 and an inner hook beam part 97 located radially inward of the outer hook beam part 96 as shown in Figs. 13 and 14. As shown in Fig. 14, a width dimension 97W of the inner hook beam part 97 is smaller than a width dimension 96W of the outer hook beam part 96. The width dimension 96W of the outer hook beam part 96 means the dimension of the outer hook beam part 96 in the direction orthogonal to the radial direction in a planar view. Likewise, the width dimension 97W of the inner hook beam part 97 means the dimension of the inner hook beam part 97 in the direction orthogonal to the radial direction in a planar view. In this way, by reducing the width dimension 97W of the inner hook beam part 97 in a positive manner, the hook beam part 94 in the guide hook 68 becomes likely to be solidified prior to the other parts during solidification shrinkage of the insulator 55. Therefore, the linear shape of the hook beam part 94 of the guide hook 68 becomes fixed preferentially before the other parts, which effectively prevents unintended deformation of the guide hook 68 during solidification shrinkage.

Further, as shown in Figs. 13 and 14, the cover upper surface 65B extends to project outward along the hook beam part 94. In this structure, when injecting an adhesive 98 between the guide pin 69 and the inner peripheral wall 70, the adhesive 98 runs along a boundary 99 between the hook beam part 94 and the cover upper surface 65B. In this modified example, because the cover upper surface 65B extends to project outward along the hook beam part 94, the length of the boundary 99 is effectively reserved, and thereby making it possible to hold a large amount of the adhesive 98 along the boundary 99 and control downward flow of the adhesive 98.

In the first embodiment and the second embodiment described above, each connecting wire electrically connects two coils adjacent in the circumferential direction in some cases, and electrically connects two coils not adjacent in the circumferential direction in other cases. Which two coils each connecting wire electrically connects is determined by how to wind an exciting coil or output coil on each tooth or which of 1-phase excitation 2-phase output, 2-phase excitation 1-phase output and 2-phase excitation 2-phase output the resolver stator adopts.

This application is based upon and claims the benefit of priority from Japanese patent application No. 2016-204962, filed on October 19, 2016,

### Reference Signs List

1 RESOLVER
2 RESOLVER STATOR
2C ROTATION AXIS
3 RESOLVER ROTOR
4 STATOR CORE
5 INSULATOR (RESIN FUNCTION PART)
6 COIL
6P FIRST COIL
6Q SECOND COIL
7 CONNECTING WIRE
8 YOKE
8A YOKE UPPER SURFACE (YOKE END SURFACE)
8B YOKE LOWER SURFACE
8C YOKE INNER PERIPHERAL SURFACE
9 TOOTH
10 TOOTH WINDING PART
10A END
11 TOOTH END PART
15 YOKE UPPER SURFACE COVER PART (YOKE END SURFACE COVER PART)
15A OUTER END
15B COVER UPPER SURFACE (COVER END SURFACE)
17 YOKE INNER PERIPHERAL SURFACE COVER PART
17A INNER PERIPHERAL SURFACE
18 GUIDE HOOK
19 GUIDE PIN
20 OUTER PERIPHERAL WALL
20A OUTER PERIPHERAL WALL UPPER SURFACE (OUTER PERIPHERAL WALL END SURFACE)
20B OUTER PERIPHERAL WALL INNER PERIPHERAL SURFACE
20P FIRST OUTER PERIPHERAL WALL
20Q SECOND OUTER PERIPHERAL WALL
30 EXTERNAL CONNECTION PART
31 COIL EXTERNAL SPACE
31P FIRST COIL EXTERNAL SPACE
31Q SECOND COIL EXTERNAL SPACE
40 HOOK REINFORCEMENT PART
41 HOOK PROTRUSION PART
42 HOOK BODY
42A OUTER SURFACE
43 HOOK CURVE ADJUSTMENT PART
43A LOWER SURFACE
44 HOOK BEAM PART
44A HOOK BEAM UPPER SURFACE (HOOK BEAM END SURFACE)
44B DISTAL END
45 ACCOMMODATING GROOVE
46 INNER HOOK BEAM PART
46W WIDTH DIMENSION
47 OUTER HOOK BEAM PART
47W WIDTH DIMENSION
48 ADHESIVE
49 BOUNDARY
51 RESOLVER
52 RESOLVER STATOR
52C ROTATION AXIS
53 RESOLVER ROTOR
54 STATOR CORE
55 INSULATOR (RESIN FUNCTION PART)
56 COIL
56P FIRST COIL
56Q SECOND COIL
57 CONNECTING WIRE
58 YOKE
58A YOKE UPPER SURFACE (YOKE END SURFACE)
58B YOKE LOWER SURFACE
58C YOKE OUTER PERIPHERAL SURFACE
59 TOOTH
60 TOOTH WINDING PART
60A END
61 TOOTH END PART
65 YOKE UPPER SURFACE COVER PART (YOKE END SURFACE COVER PART)
65A OUTER END
65B COVER UPPER SURFACE (COVER END SURFACE)
67 YOKE OUTER PERIPHERAL SURFACE COVER PART
67A OUTER PERIPHERAL SURFACE
68 GUIDE HOOK
69 GUIDE PIN
70 INNER PERIPHERAL WALL
70A INNER PERIPHERAL WALL UPPER SURFACE (INNER PERIPHERAL WALL END SURFACE)
70B INNER PERIPHERAL WALL OUTER PERIPHERAL SURFACE
70P FIRST INNER PERIPHERAL WALL
70Q SECOND INNER PERIPHERAL WALL
80 EXTERNAL CONNECTION PART
81 COIL INTERNAL SPACE
81P FIRST COIL INTERNAL SPACE
81Q SECOND COIL INTERNAL SPACE
90 HOOK REINFORCEMENT PART
91 HOOK PROTRUSION PART
92 HOOK BODY
92A INNER SURFACE
93 HOOK CURVE ADJUSTMENT PART
93A LOWER SURFACE
94 HOOK BEAM PART
94A HOOK BEAM UPPER SURFACE (HOOK BEAM END SURFACE)
94B DISTAL END
95 ACCOMMODATING GROOVE
96 OUTER HOOK BEAM PART
96W WIDTH DIMENSION
97 INNER HOOK BEAM PART
97W WIDTH DIMENSION
98 ADHESIVE
99 BOUNDARY

## Claims

1. A resolver stator (2) comprising:
a stator core (4) including an annular yoke (8) and a plurality of teeth (9) projecting radially inward from the yoke (8);
a plurality of coils (6) respectively wound on the plurality of teeth (9);
a connecting wire (7) electrically connecting the plurality of coils (6) with each other; and
a resin function part (5) made of insulating resin and fixed to the stator core (4), wherein
the resolver stator (2) has an axis direction parallel to a rotation axis of the resolver stator (2), say axis having a first orientation and a second orientation opposite to the first orientation,
the plurality of coils include a first coil (6P) and a second coil (6Q) adjacent to each other in a circumferential direction,
at least part of the connecting wire (7) extends from a first coil external space (31P) located radially outward of the first coil (6P) and on a first side of the stator core (2) having the first orientation, to a second coil external space (31Q) located radially outward of the second coil and on the first side of the stator core (2),
the yoke (8) includes a yoke end surface (8A) facing in the first orientation and a yoke inner peripheral surface (8C) facing radially inward,
the resin function part (5) includes
a yoke end surface cover part (15) covering the yoke end surface (8A);
a yoke inner peripheral surface cover part (17) covering the yoke inner peripheral surface (8C);
an outer peripheral wall (20) projecting in the first orientation from the yoke end surface cover part (15); and
a guide hook (18) located radially inward of the outer peripheral wall (20) and guiding the connecting wire (7),
the connecting wire is curved to be convex in the second orientation by being caught on the guide hook (18) while extending from the first coil external space (31P) to the second coil external space (31Q),
the outer peripheral wall (20) has an annular shape and includes
a first outer peripheral wall (20P) opposite the first coil (6P) in a radial direction; and
a second outer peripheral wall (20Q) opposite the second coil (6Q) in the radial direction,
the first outer peripheral wall (20P) and the second outer peripheral wall (20Q) are joined to each other in a seamless manner, and
the guide hook (18) includes
a hook beam part (44) fixed to a cover end surface (15B) facing in the first orientation of the yoke end surface cover part (15) and extending radially inward relative to the outer peripheral wall (20); and
a hook body (42) projecting in the second orientation from the hook beam part (44) and opposite the yoke inner peripheral surface cover part (17) in the radial direction.

2. The resolver stator (2) according to Claim 1, wherein
the hook beam part (44) extends radially outward to reach the outer peripheral wall (20), and
the hook beam part (44) and the outer peripheral wall (20) are joined to each other in a seamless manner.

3. The resolver stator (2) according to Claim 1 or 2, wherein
the hook beam part (44) includes an inner hook beam part (46) and an outer hook beam part (47) located radially outward of the inner hook beam part, and
the dimension of the outer hook beam part (47) according to the circumferential direction is smaller than the dimension of the inner hook beam part (46) according to the circumferential direction.

4. The resolver stator (2) according to Claim 3, wherein the cover end surface extends radially inward along the hook beam part (44).

5. The resolver stator (2) according to any one of Claims 1 to 4, wherein an outer peripheral wall end surface facing in the first orientation of the outer peripheral wall and a hook beam end surface facing in the first orientation of the hook beam part (44) are in the same plane.

6. The resolver stator (2) according to any one of Claims 1 to 5, wherein the hook beam part (44) projects from the cover end surface (15B) in the first orientation.

7. A resolver stator (52) comprising:
a stator core (54) including an annular yoke (58) and a plurality of teeth (59) projecting radially outward from the yoke (58);
a plurality of coils (56) respectively wound on the plurality of teeth (59);
a connecting wire (57) electrically connecting the plurality of coils (56) with each other; and
a resin function part (55) made of insulating resin and fixed to the stator core (54), wherein
the resolver stator (52) has an axis direction parallel to a rotation axis of the resolver stator (52), say axis having a first orientation and a second orientation opposite to the first orientation,
the plurality of coils include a first coil (56P) and a second coil (56Q) adjacent to each other in a circumferential direction,
at least part of the connecting wire (57) extends from a first coil internal space (81P) located radially inward of the first coil (56P) and on a first side of the stator core (52) having the first orientation, to a second coil internal space (81Q) located radially inward of the second coil and on the first side of the stator core (52),
the yoke (58) includes a yoke end surface (58A) facing in the first orientation and a yoke outer peripheral surface (58C) facing radially outward,
the resin function part (55) includes
a yoke end surface cover part (65) covering the yoke end surface (58A);
a yoke outer peripheral surface cover part (67) covering the yoke outer peripheral surface (58C);
an inner peripheral wall (70) projecting in the first orientation from the yoke end surface cover part (65); and
a guide hook (68) located radially outward of the inner peripheral wall (70) and guiding the connecting wire (57),
the connecting wire is curved to be convex in the second orientation by being caught on the guide hook (58) while extending from the first coil internal space (81P) to the second coil internal space (81Q),
the inner peripheral wall (70) includes
a first inner peripheral wall (70P) opposite the first coil (56P) in a radial direction; and
a second inner peripheral wall (70Q) opposite the second coil (56Q) in the radial direction,
the first inner peripheral wall (70P) and the second inner peripheral wall (70Q) are joined to each other in a seamless manner, and
the guide hook (68) includes
a hook beam part (94) fixed to a cover end surface (65B) facing in the first orientation of the yoke end surface cover part (65) and extending radially outward; and
a hook body (92) projecting in the second orientation from the hook beam part (94) and opposite the yoke outer peripheral surface cover part (67) in the radial direction.

8. The resolver stator (52) according to Claim 7, wherein
the hook beam part (94) extends radially inward to reach the inner peripheral wall (70), and
the hook beam part (94) and the inner peripheral wall (70) are joined to each other in a seamless manner.

9. The resolver stator (52) according to Claim 7 or 8, wherein
the hook beam part (94) includes an outer hook beam part (96) and an inner hook beam part (97) located radially inward of the outer hook beam part, and
the dimension of the inner hook beam part (97) according to the circumferential direction is smaller than the dimension of the outer hook beam part (96) according to the circumferential direction.

10. The resolver stator (52) according to Claim 9, wherein the cover end surface (65B) extends radially outward along the hook beam part (94).

11. The resolver stator (52) according to any one of Claims 7 to 10, wherein an inner peripheral wall end surface facing in the first orientation of the inner peripheral wall and a hook beam end surface facing in the first orientation of the hook beam part (94) are in the same plane.

12. The resolver stator (52) according to any one of Claims 7 to 11, wherein
the inner peripheral wall (20) has an annular shape;
the hook beam part (94) extends radially outward relative to the inner peripheral wall (70).

13. The resolver stator (52) according to any one of Claims 7 to 11, wherein the hook beam part (94) projects from the cover end surface (65B) in the first orientation and extends radially outward relative to the inner peripheral wall (70).

## Patentansprüche

1. Resolverstator (2), umfassend:
einen Statorkern (4) mit einem ringförmigen Joch (8) und einer Mehrzahl von Zähnen (9), die von dem Joch (8) radial einwärts vorstehen;
eine Mehrzahl von Spulen (6), die entsprechend auf die Mehrzahl von Zähnen (9) gewickelt sind;
einen Verbindungsdraht (7), der die Mehrzahl von Spulen (6) elektrisch miteinander verbindet; und
einen Harzfunktionsteil (5) aus einem isolierenden Harz, der an dem Statorkern (4) fixiert ist, wobei
der Resolverstator (2) eine Achsenrichtung parallel zu einer Rotationsachse des Resolverstators (2) aufweist, wobei die Achse eine erste Ausrichtung und eine zu der ersten Ausrichtung entgegengesetzte zweite Ausrichtung aufweist,
wobei die Mehrzahl von Spulen eine erste Spule (6P) und eine zweite Spule (6Q) aufweist, die in eine umfängliche Richtung nebeneinander liegen;
wobei sich wenigstens ein Teil des Verbindungsdrahtes (7) von einem ersten äußeren Spulenraum (31P), der radial auswärts der ersten Spule (6P) und auf einer ersten Seite des Statorkerns (2) mit der ersten Ausrichtung angeordnet ist, zu einem zweiten äußeren Spulenraum (31Q) erstreckt, der radial auswärts der zweiten Spule und auf der ersten Seite des Statorkerns (2) angeordnet ist;
wobei das Joch (8) eine Jochstirnfläche (8A) aufweist, die in die erste Ausrichtung ausgerichtet ist, und eine innere periphere Jochoberfläche (8C), die radial einwärts ausgerichtet ist;
wobei der Harzfunktionsteil (5) folgendes aufweist:
einen Jochstirnflächen-Abdeckungsteil (15), der die Jochstirnfläche (8A) abdeckt;
einen Abdeckungsteil (17) für die innere periphere Jochoberfläche, der die innere periphere Jochoberfläche (8C) abdeckt;
eine äußere periphere Wand (20), die von dem Jochstirnflächen-Abdeckungsteil (15) in die erste Ausrichtung vorsteht; und
einen Führungshaken (18), der radial einwärts der äußeren peripheren Wand (20) angeordnet ist und den Verbindungsdraht (7) führt;
wobei der Verbindungsdraht gekrümmt ist, so dass er in der zweiten Ausrichtung konvex ist, indem er durch den Führungshaken (18) erfasst wird, während er sich von dem ersten äußeren Spulenraum (31P) zu dem einem zweiten äußeren Spulenraum (31Q) außerhalb der zweiten Spule erstreckt;
wobei die äußere periphere Wand (20) eine Ringform besitzt und folgendes aufweist:
eine erste äußere periphere Wand (20P) entgegengesetzt zu der ersten Spule (6P) in einer radialen Richtung; und
eine zweite äußere periphere Wand (20Q) entgegengesetzt zu der zweiten Spule (6Q) in der radialen Richtung;
wobei die erste äußere periphere Wand (20P) und die zweite äußere periphere Wand (20Q) nahtlos miteinander verbunden sind; und
wobei der Führungshaken (18) folgendes aufweist:
einen Hakentraversenteil (44), der an einer Abdeckungsstirnfläche (15B) fixiert ist, die zu der ersten Ausrichtung des Jochstirnflächen-Abdeckungsteils (15) zeigt und sich radial einwärts im Verhältnis zu der äußeren peripheren Wand (20) erstreckt; und
einen Hakenkörper (42), der von dem Hakentraversenteil (44) in die zweite Ausrichtung vorsteht und entgegengesetzt zu dem Abdeckungsteil (17) für die innere periphere Jochoberfläche in die radiale Richtung.

2. Resolverstator (2) nach Anspruch 1, wobei
sich der Hakentraversenteil (44) radial auswärts erstreckt, so dass er die äußere periphere Wand (20) erreicht; und
wobei der Hakentraversenteil (44) und die äußere periphere Wand (20) nahtlos miteinander verbunden sind.

3. Resolverstator (2) nach Anspruch 1 oder 2, wobei
der Hakentraversenteil (44) einen inneren Hakentraversenteil (46) und einen äußeren Hakentraversenteil (47) aufweist, der zu dem inneren Hakentraversenteil radial auswärts angeordnet ist; und
wobei die Abmessung des äußeren Hakentraversenteils (47) in die umfängliche Richtung kleiner ist als die Abmessung des inneren Hakentraversenteils (46) in die umfängliche Richtung.

4. Resolverstator (2) nach Anspruch 3, wobei sich die Abdeckungsstirnfläche entlang des Hakentraversenteils (44) radial einwärts erstreckt.

5. Resolverstator (2) nach einem der Ansprüche 1 bis 4, wobei sich eine Stirnfläche der äußeren peripheren Wand, die in die erste Ausrichtung der äußeren peripheren Wand zeigt, und eine Stirnfläche der Hakentraverse, die in die erste Ausrichtung des Hakentraversenteils (44) zeigt, in der gleichen Ebene befinden.

6. Resolverstator (2) nach einem der Ansprüche 1 bis 5, wobei der Hakentraversenteil (44) in der ersten Ausrichtung von der Abdeckungsstirnfläche (15B) vorsteht.

7. Resolverstator (52), umfassend:
einen Statorkern (54) mit einem ringförmigen Joch (58) und einer Mehrzahl von Zähnen (59), die von dem Joch (58) radial auswärts vorstehen;
eine Mehrzahl von Spulen (56), die entsprechend auf die Mehrzahl von Zähnen (59) gewickelt sind;
einen Verbindungsdraht (57), der die Mehrzahl von Spulen (56) elektrisch miteinander verbindet; und
einen Harzfunktionsteil (55) aus einem isolierenden Harz, der an dem Statorkern (54) fixiert ist, wobei
der Resolverstator (52) eine Achsenrichtung parallel zu einer Rotationsachse des Resolverstators (52) aufweist, wobei die Achse eine erste Ausrichtung und eine zu der ersten Ausrichtung entgegengesetzte zweite Ausrichtung aufweist,
wobei die Mehrzahl von Spulen eine erste Spule (56P) und eine zweite Spule (56Q) aufweist, die in eine umfängliche Richtung nebeneinander liegen;
wobei sich wenigstens ein Teil des Verbindungsdrahtes (57) von einem ersten inneren Spulenraum (81P), der radial einwärts der ersten Spule (56P) und auf einer ersten Seite des Statorkerns (52) mit der ersten Ausrichtung angeordnet ist, zu einem zweiten inneren Spulenraum (81Q) erstreckt, der radial einwärts der zweiten Spule und auf der ersten Seite des Statorkerns (52) angeordnet ist;
wobei das Joch (58) eine Jochstirnfläche (58A) aufweist, die in die erste Ausrichtung ausgerichtet ist, und eine äußere periphere Jochoberfläche (58C), die radial auswärts ausgerichtet ist;
wobei der Harzfunktionsteil (55) folgendes aufweist:
einen Jochstirnflächen-Abdeckungsteil (65), der die Jochstirnfläche (58A) abdeckt;
einen Abdeckungsteil (67) für die äußere periphere Jochoberfläche, der die äußere periphere Jochoberfläche (58C) abdeckt;
eine innere periphere Wand (70), die von dem Jochstirnflächen-Abdeckungsteil (65) in die erste Ausrichtung vorsteht; und
einen Führungshaken (68), der radial auswärts der inneren peripheren Wand (70) angeordnet ist und den Verbindungsdraht (57) führt;
wobei der Verbindungsdraht gekrümmt ist, so dass er in der zweiten Ausrichtung konvex ist, indem er durch den Führungshaken (58) erfasst wird, während er sich von dem einem ersten inneren Spulenraum (81P) zu dem zweiten inneren Spulenraum (81Q) erstreckt;
wobei die innere periphere Wand (70) folgendes aufweist:
eine erste innere periphere Wand (70P) entgegengesetzt zu der ersten Spule (56P) in einer radialen Richtung; und
eine zweite innere periphere Wand (70Q) entgegengesetzt zu der zweiten Spule (56Q) in der radialen Richtung;
wobei die erste innere periphere Wand (70P) und die zweite innere periphere Wand (70Q) nahtlos miteinander verbunden sind; und
wobei der Führungshaken (68) folgendes aufweist:
einen Hakentraversenteil (94), der an einer Abdeckungsstirnfläche (65B) fixiert ist, die zu der ersten Ausrichtung des Jochstirnflächen-Abdeckungsteils (65) zeigt und sich radial auswärts erstreckt; und
einen Hakenkörper (92), der von dem Hakentraversenteil (94) in die zweite Ausrichtung vorsteht und entgegengesetzt zu dem Abdeckungsteil (67) für die äußere periphere Jochoberfläche in die radiale Richtung.

8. Resolverstator (52) nach Anspruch 7, wobei
sich der Hakentraversenteil (94) radial einwärts erstreckt, so dass er die innere periphere Wand (70) erreicht; und
wobei der Hakentraversenteil (94) und die innere periphere Wand (70) nahtlos miteinander verbunden sind.

9. Resolverstator (52) nach Anspruch 7 oder 8, wobei
der Hakentraversenteil (94) einen äußeren Hakentraversenteil (96) und einen inneren Hakentraversenteil (97) aufweist, der zu dem äußeren Hakentraversenteil radial einwärts angeordnet ist; und
wobei die Abmessung des inneren Hakentraversenteils (97) in die umfängliche Richtung kleiner ist als die Abmessung des äußeren Hakentraversenteils (96) in die umfängliche Richtung.

10. Resolverstator (52) nach Anspruch 9, wobei sich die Abdeckungsstirnfläche (65B) entlang des Hakentraversenteils (94) radial auswärts erstreckt.

11. Resolverstator (52) nach einem der Ansprüche 7 bis 10, wobei sich eine Stirnfläche der inneren peripheren Wand, die in die erste Ausrichtung der inneren peripheren Wand zeigt, und eine Stirnfläche der Hakentraverse, die in die erste Ausrichtung des Hakentraversenteils (94) zeigt, in der gleichen Ebene befinden.

12. Resolverstator (52) nach einem der Ansprüche 7 bis 11, wobei
die innere periphere Wand (20) eine Ringform aufweist;
sich der Hakentraversenteil (94) im Verhältnis zu der inneren peripheren Wand (70) radial auswärts erstreckt.

13. Resolverstator (52) nach einem der Ansprüche 7 bis 11, wobei der Hakentraversenteil (94) in der ersten Ausrichtung von der Abdeckungsstirnfläche (65B) vorsteht und sich im Verhältnis zu der inneren peripheren Wand (70) radial auswärts erstreckt.

## Revendications

1. Stator de résolveur (2) comprenant :
un noyau de stator (4) comprenant une culasse annulaire (8) et une pluralité de dents (9) faisant saillie radialement vers l'intérieur depuis la culasse (8) ;
une pluralité de bobines (6) respectivement enroulées sur la pluralité de dents (9) ;
un fil de connexion (7) connectant électriquement la pluralité de bobines (6) entre elles ; et
une pièce fonctionnelle en résine (5) en résine isolante et fixée au noyau du stator (4),
le stator de résolveur (2) ayant une direction d'axe parallèle à un axe de rotation du stator de résolveur (2), ledit axe ayant une première orientation et une seconde orientation opposée à la première orientation,
la pluralité de bobines comprenant une première bobine (6P) et une seconde bobine (6Q) adjacentes l'une à l'autre dans une direction circonférentielle,
au moins une partie du fil de connexion (7) s'étendant d'un espace externe de première bobine (31P) situé radialement vers l'extérieur de la première bobine (6P) et sur un premier côté du noyau de stator (2) ayant la première orientation, vers un espace externe de seconde bobine (31Q) situé radialement vers l'extérieur de la seconde bobine et sur le premier côté du noyau de stator (2),
la culasse (8) comprenant une surface d'extrémité de culasse (8A) orientée selon la première orientation et une surface périphérique interne de culasse (8C) orientée radialement vers l'intérieur,
la partie fonctionnelle en résine (5) comprenant
une partie de couvercle de surface d'extrémité de culasse (15) couvrant la surface d'extrémité de culasse (8A) ;
une partie de couvercle de surface périphérique interne de culasse (17) couvrant la surface périphérique interne de culasse (8C) ;
une paroi périphérique externe (20) faisant saillie selon la première orientation à partir de la partie de couvercle de surface d'extrémité de culasse (15) ; et
un crochet de guidage (18) situé radialement vers l'intérieur de la paroi périphérique externe (20) et guidant le fil de connexion (7),
le fil de connexion étant courbé pour être convexe selon la seconde orientation en étant pris sur le crochet de guidage (18) tout en s'étendant de l'espace externe de première bobine (31P) vers l'espace externe de seconde bobine (31Q),
la paroi périphérique externe (20) ayant une forme annulaire et comprenant
une première paroi périphérique externe (20P) opposée à la première bobine (6P) dans une direction radiale ; et
une seconde paroi périphérique externe (20Q) opposée à la seconde bobine (6Q) dans la direction radiale,
la première paroi périphérique externe (20P) et la seconde paroi périphérique externe (20Q) étant jointes l'une à l'autre sans raccord, et
le crochet de guidage (18) comprenant
une partie de poutre de crochet (44) fixée à une surface d'extrémité de couvercle (15B) orientée selon la première orientation de la partie de couvercle de surface d'extrémité de culasse (15) et s'étendant radialement vers l'intérieur par rapport à la paroi périphérique externe (20) ; et
un corps de crochet (42) faisant saillie selon la seconde orientation à partir de la partie de poutre de crochet (44) et opposé à la partie de couvercle de surface périphérique interne de culasse (17) dans la direction radiale.

2. Stator de résolveur (2) selon la revendication 1,
la partie de poutre de crochet (44) s'étendant radialement vers l'extérieur pour atteindre la paroi périphérique externe (20), et
la partie de poutre de crochet (44) et la paroi périphérique externe (20) étant reliées entre elles sans raccord.

3. Stator de résolveur (2) selon la revendication 1 ou 2,
la partie de poutre de crochet (44) comprenant une partie de poutre de crochet interne (46) et une partie de poutre de crochet externe (47) située radialement vers l'extérieur de la partie de poutre de crochet interne, et
la dimension de la partie de poutre de crochet externe (47) selon la direction circonférentielle étant plus petite que la dimension de la partie de poutre de crochet interne (46) selon la direction circonférentielle.

4. Stator de résolveur (2) selon la revendication 3, la surface d'extrémité de couvercle s'étendant radialement vers l'intérieur le long de la partie de poutre de crochet (44).

5. Stator de résolveur (2) selon l'une quelconque des revendications 1 à 4, une surface d'extrémité de paroi périphérique externe orientée selon la première orientation de la paroi périphérique externe et une surface d'extrémité de poutre de crochet orientée selon la première orientation de la partie de poutre de crochet (44) étant dans le même plan.

6. Stator de résolveur (2) selon l'une quelconque des revendications 1 à 5, la partie de poutre de crochet (44) faisant saillie de la surface d'extrémité de couvercle (15B) selon la première orientation.

7. Stator de résolveur (52) comprenant :
un noyau de stator (54) comprenant une culasse annulaire (58) et une pluralité de dents (59) faisant saillie radialement vers l'extérieur à partir de la culasse (58) ;
une pluralité de bobines (56) respectivement enroulées sur la pluralité de dents (59) ;
un fil de connexion (57) connectant électriquement la pluralité de bobines (56) entre elles ; et
une pièce fonctionnelle en résine (55) en résine isolante et fixée au noyau du stator (54),
le stator de résolveur (52) ayant une direction d'axe parallèle à un axe de rotation du stator de résolveur (52), ledit axe ayant une première orientation et une seconde orientation opposée à la première orientation,
la pluralité de bobines comprenant une première bobine (56P) et une seconde bobine (56Q) adjacentes l'une à l'autre dans une direction circonférentielle,
au moins une partie du fil de connexion (57) s'étendant d'un espace interne de première bobine (81P) situé radialement vers l'intérieur de la première bobine (56P) et sur un premier côté du noyau de stator (52) ayant la première orientation, vers un espace interne de seconde bobine (81Q) situé radialement vers l'intérieur de la seconde bobine et sur le premier côté du noyau de stator (52),
la culasse (58) comprenant une surface d'extrémité de culasse (58A) orientée selon la première orientation et une surface périphérique externe de culasse (58C) orientée radialement vers l'extérieur,
la partie fonctionnelle en résine (55) comprenant
une partie de couvercle de surface d'extrémité de culasse (65) couvrant la surface d'extrémité de culasse (58A) ;
une partie de couvercle de surface périphérique externe de culasse (67) couvrant la surface périphérique externe de culasse (58C) ;
une paroi périphérique externe (70) faisant saillie selon la première orientation à partir de la partie de couvercle de surface d'extrémité de culasse (65) ; et
un crochet de guidage (68) situé radialement vers l'extérieur de la paroi périphérique interne (70) et guidant le fil de connexion (57),
le fil de connexion étant courbé pour être convexe selon la seconde orientation en étant pris sur le crochet de guidage (58) tout en s'étendant de l'espace interne de première bobine (81P) vers l'espace interne de seconde bobine (81Q),
la paroi périphérique interne (70) comprenant
une première paroi périphérique interne (70P) opposée à la première bobine (56P) dans une direction radiale ; et
une seconde paroi périphérique interne (70Q) opposée à la seconde bobine (56Q) dans la direction radiale,
la première paroi périphérique interne (70P) et la seconde paroi périphérique interne (70Q) étant jointes l'une à l'autre sans raccord, et
le crochet de guidage (68) comprenant
une partie de poutre de crochet (94) fixée à une surface d'extrémité de couvercle (65B) orientée selon la première orientation de la partie de couvercle de surface d'extrémité de culasse (65) et s'étendant radialement vers l'extérieur ; et
un corps de crochet (92) faisant saillie selon la seconde orientation à partir de la partie de poutre de crochet (94) et opposé à la partie de couvercle de surface périphérique externe de culasse (67) dans la direction radiale.

8. Stator de résolveur (52) selon la revendication 7,
la partie de poutre de crochet (94) s'étendant radialement vers l'intérieur pour atteindre la paroi périphérique interne (70), et
la partie de poutre de crochet (94) et la paroi périphérique interne (70) étant reliées entre elles sans raccord.

9. Stator de résolveur (52) selon la revendication 7 ou 8,
la partie de poutre de crochet (94) comprenant une partie de poutre de crochet externe (96) et une partie de poutre de crochet interne (97) située radialement à l'intérieur de la partie de poutre de crochet externe, et
la dimension de la partie de poutre de crochet interne (97) selon la direction circonférentielle étant plus petite que la dimension de la partie de poutre de crochet externe (96) selon la direction circonférentielle.

10. Stator de résolveur (52) selon la revendication 9, la surface d'extrémité de couvercle (65B) s'étendant radialement vers l'extérieur le long de la partie de poutre de crochet (94).

11. Stator de résolveur (52) selon l'une quelconque des revendications 7 à 10, une surface d'extrémité de paroi périphérique interne orientée selon la première orientation de la paroi périphérique interne et une surface d'extrémité de poutre de crochet orientée selon la première orientation de la partie de poutre de crochet (94) étant dans le même plan.

12. Stator de résolveur (52) selon l'une quelconque des revendications 7 à 11,
la paroi périphérique interne (20) ayant une forme annulaire ;
la partie de poutre de crochet (94) s'étendant radialement vers l'extérieur par rapport à la paroi périphérique interne (70).

13. Stator de résolveur (52) selon l'une quelconque des revendications 7 à 11, la partie de poutre de crochet (94) faisant saillie de la surface d'extrémité de couvercle (65B) selon la première orientation et s'étendant radialement vers l'extérieur par rapport à la paroi périphérique interne (70).
